# EUROPEAN PATENT SPECIFICATION

(11) **EP 2 277 687 B1**
(45) Date of publication and mention of the grant of the patent: **04.03.2015**
(21) Application number: 10251268.8
(22) Date of filing: 15.07.2010
(51) Int. Cl.: B22F 3/105, B29C 37/00, B29C 67/00

(54) **Optimal dimensional and mechanical properties of laser sintered hardware by thermal analysis and parameter optimization**
Optimale Dimensions- und Mechanikeigenschaften von lasergesinterter Hardware durch die Wärmeanalyse und Parameteroptimierung
Propriétés mécaniques et dimensionnelles optimales d'un hardware fritté au laser par analyse thermique et optimisation des paramètres

(30) Priority: 20.07.2009 US 505809
(43) Date of publication of application: 26.01.2011
(73) Proprietor: Aerojet Rocketdyne of DE, Inc., Canoga Park, CA 91309 (US)
(72) Inventor: Fink, Jeffrey E., Castle Valley, UT 84532 (US); Narvett, Lori A., Seattle, WA 98121 (US); Taylor, Tracy L., Simi Valley, CA 93065-1910 (US); Shapey, Bryon L., Bellevue, WA 98006 (US)
(74) Representative: Taylor, Adam David

(56) References cited:
- EP-A1- 1 486 317
- DE-A1- 10 050 280
- DE-A1-102007 009 273
- US-A1- 2008 067 722
- Wang Rong-Ji, Li Xin-hua, Wu Qing-ding, Wang Lingling: "Optimizing process parameters for selective laser sintering based on neural network and genetic algorithm", The International Journal of Advanced Manufacturing Technology, vol. Volume 42, no. 11-12 26 August 2008 (2008-08-26), pages 1035-1042, XP002610275, DOI: 10.1007/s00170-008-1669-0 Retrieved from the Internet: URL:http://www.springerlink.com/content/w8 6x57r376346075/fulltext.pdf [retrieved on 2010-11-16]
- E. Boillat, S. Kolosov, R. Glardon, M. Loher, D. Saladin, G. Levy: "FINITE ELEMENT AND NEURAL NETWORK MODELS FOR PROCESS OPTIMISATION IN SELECTIVE LASER SINTERING", http://en.scientificcommons.org/42585406 , 31 December 2008 (2008-12-31), XP002610276, Retrieved from the Internet: URL:http://www.fhsg.ch/fhshome/fhs_homepag e.nsf/27033704b8ed4b16c1256d3a00385375/ff0 d25e0490652b1c1256ec2002a0517/$file/finite elem and neural network models for_2003.pdf [retrieved on 2010-11-16]
- J. D. Keeler, E. Hartman, S. Piché: "Process modeling and optimization using focused attention neural networks", ISA Transactions, vol. 37, no. 1 1 March 1998 (1998-03-01), pages 41-52, XP002610277, DOI: 10.1016/S0019-0578(98)00005-6 [retrieved on 2010-11-18]

## Description

The present invention relates generally to rapid prototype machines and more particularly to optimization of build runs using a selective laser sintering machine or the like.

Methods of rapid prototyping, such as selective laser sintering (SLS), are well known in the art and have traditionally been employed to produce parts known as "rapid prototypes," which are parts that are used to demonstrate a proof of concept or a requirement such as proper form and fit. The selective laser sintering process generally consists of producing parts in layers from a laser-fusible powder that is provided one layer at a time. The powder is fused, or sintered, by the application of laser energy that is directed to portions of the powder corresponding to the cross-section of the part. After sintering the powder in each layer, a successive layer of powder is applied and the process of sintering portions of the powder corresponding to the cross-section of the part is repeated, with sintered portions of successive layers fusing to sintered portions of previous layers until the part is complete. Accordingly, selective laser sintering is capable of producing parts having relatively complex geometry with relatively acceptable dimensional accuracy and using a variety of materials such as wax, plastics, metals, and ceramics.

Generally, SLS parts are produced directly from an engineering master definition in CAD (computer aided design) models. Thus, the time required to produce a rapid prototype is significantly shorter than with conventional methods such as sheet metal forming, machining, molding, or other methods known in the art. Further, powder materials that are presently used for selective laser sintering generally have relatively low mechanical properties due to the nature of the rapid prototype application. Accordingly, parts formed using selective laser sintering are typically not used within a production design or as production parts due to limited performance capabilities such as low or inconsistent mechanical properties.

Aerospace parts have relatively stringent design requirements compared with parts in other applications, primarily due to operating environments having extremely high loads and temperatures in addition to a relatively high amount of parts in a relatively small volume. For example, aerospace parts are commonly subjected to fluid exposure, pressure cycling, prolonged fatigue loads, buffeting, and a wide range of temperatures in operation, among others, and must further be as light weight as possible to meet performance objectives. Additionally, aerospace parts such as ECS (environmental control system) ducts typically define relatively intricate shapes in order to route around other parts and aircraft systems within an aircraft. Moreover, aerospace structures must be capable of withstanding impact loads from maintenance, handling, and in the case of military aerospace structures, from threats such as armor piercing incendiaries or high explosive incendiaries. Accordingly, aerospace parts must be designed to accommodate a variety of operating environments and thus have design requirements that are beyond those of non-aerospace parts.

The aerospace industry is constantly searching for ways to shorten the cycle time from conception to production. Any savings realized in cost or time along the cycle time line represents significant savings for the industry. To that end, there has been tremendous research in the areas of optimizing part inventories, optimizing accessibility to those part inventories, and optimizing response time to the demand for the parts. More specifically, having a very large volume of parts available at the point of assembly allows the mechanic to have any and all parts at their disposal. The inventory required, however, is extremely expensive and storing, cataloging and quickly retrieving parts presents myriad difficulties and significant cost. On the other hand, having only exactly what parts are needed at the point at which the demand exists may be ideal, but implementation difficulties and large scale integration concerns make this generally impossible. The aerospace industry, therefore, seeks to balance these competing interests in having parts always available but not expending tremendous cost to maintain vast inventories and the infrastructure to support it.

"Optimizing process parameters for selective laser sintering based on neural network and geometric algorithm" by Wang et al, International Journal of Advanced Manufacturing Technology, Vol. 42, No. 11-12, 26 August 2008 pages 1035-1042 discloses an optimizing process for minimizing shrinkage.

EP 1486317 discloses a method for iteratively improving production parts produced from a rapid prototyping machine, the method including comparing the production parts and/or iterative improvement specimens with input data that includes dimensions and material characteristics.

Viewed from a first aspect the present invention provides a process according to claim 1 for establishing manufacturing parameters for rapid prototyping using a rapid prototyping material to produce a laser sintered production part on a parts bed, the process comprising: (a) computer simulating a manufacture of the laser-sintered part based on a set of manufacturing parameters, the manufacturing parameters including each of temperature set point, laser power, machine stage height, laser offset, and part position; (b) calculating a set of physical properties of the simulated manufacture, the physical properties including part dimensions and mechanical properties; (c) comparing the calculated physical properties to desired physical properties; (d) modifying the set of manufacturing parameters based on the calculated set in order to reduce a deviation between the calculated physical properties and the desired physical properties to obtain a desired set of physical properties; and (e) communicating the modified set of parameters to a laser sintering machine to form the laser-sintered part; wherein the process includes: establishing a thermal model of the parts bed of a laser-sintering machine for laser sintering the laser sintered part based on empirical data from testing of parts previously formed in the parts bed that are different from the laser-sintered production part, and wherein the step of computer simulating of the manufacture uses the thermal model and includes evaluating and comparing the following information: thermal analysis of the part bed, material and mechanical properties, physical and thermal characteristics of the rapid prototyping material, and empirical data from previous build runs, wherein the empirical data from previous build runs is derived from dimensional evaluation of the laser-sintered production part and of iterative improvement specimens that are produced on the same parts bed during a given run.

Viewed from a second aspect the present invention provides a laser sintering system according to claim 3 for rapid prototyping using a rapid prototyping material to produce a laser sintered production part (76, 94) on a parts bed, the system comprising: an optimization module configured to computer simulate a manufacture of the laser-sintered part based on a set of manufacturing parameters, calculate a set of physical properties of the simulated manufacture, compare the calculated physical properties to desired physical properties, modify the set of manufacturing parameters based on the calculated set in order to reduce a deviation between the calculated physical properties and the desired physical properties to obtain a desired set of physical properties, and communicate the modified set of parameters to a laser sintering machine arranged to form a laser-sintered part; wherein the manufacturing parameters include each of temperature set point, laser power, machine stage height, laser offset, and part position,
wherein the physical properties include part dimensions and mechanical properties and wherein the optimization module includes a thermal model of the parts bed of a laser-sintering machine for laser sintering the laser sintered part based on empirical data from testing of parts previously formed in the parts bed that are different from the laser-sintered production part, and to computer simulate the manufacture by using the thermal model and by evaluating and comparing the following information: thermal analysis of the part bed, material and mechanical properties, physical and thermal characteristics of the rapid prototyping material, and empirical data from previous build runs, wherein the empirical data from previous build runs is derived from dimensional evaluation of the laser-sintered production part and of iterative improvement specimens that are produced on the same parts bed during a given run.

The preferred embodiments of the present invention will now be described by way of example only and with reference to the accompanying drawings, wherein:
Figure 1 is a flow diagram illustrating a selective laser sintering process;
Figure 2 is a diagram of a part bed configuration;
Figure 3 is a flow diagram illustrating the optimization process;
Figure 4a a simplified representation of a selective laser sintering process during an exemplary build run;
Figure 4b a simplified representation of a selective laser sintering process during an exemplary build run;
Figure 4c a simplified representation of a selective laser sintering process during an exemplary build run;
Figure 5 is a perspective view of a typical part bed showing production parts and iterative improvement specimens; and
Figure 6 is a perspective view of an exemplary parts bed of a rapid prototyping machine showing the Z-Tensile arrays.

The following description of the preferred implementations is merely exemplary in nature and is in no way intended to limit the invention, its application, or uses. Additionally, the selective laser sintering process as well as other rapid prototyping processes are well known by those skilled in the art and will therefore not be described herein in extensive detail.

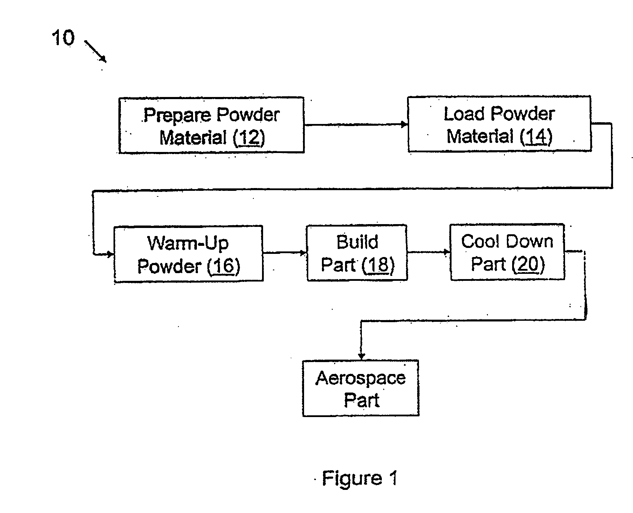

Referring to Figure 1, a process of fabricating at least one aerospace part according to the present invention is represented in a flow diagram format as indicated by reference numeral 10. As shown, the process generally comprises a step 12 of preparing a powder material, loading the powder material, per step 14, into a laser sintering machine, warming up the powder material at step 16, building the part at step 18, and cooling down the part at step 20. Additionally, the process 10 includes several build and part parameters, which are characterized as either "hidden," "fixed," or "variable." The hidden and fixed parameters are generally provided by the equipment manufacturer and are also a part of the operating software for the laser sintering machine. Preferably, a 2500 Plus Sintering Machine from 3D Systems® Valencia, CA, is used to fabricate parts in accordance with the present invention. The hidden and fixed variables are discussed in greater detail along with more specifics of a Laser Sintering Machine in co-pending commonly assigned United States Patent Application Number 10/205,451, which is hereby incorporated by reference as a fully set forth herein.

The variable parameters, some of which are outlined in Table 1, have been developed through extensive research and testing by the inventors in order to produce parts that are capable of direct application in aerospace structures and systems. The variable parameters that have been developed according to the present invention and that are applicable to the process phases of the present invention are listed below in Table 1 for each of the process phases. The variables applicable to both an individual part or the parts fabricated a nested part build (i.e., more than one part).

Moreover, the variables as outlined in Table 1 are not an exhaustive list of variables that contribute to the parameter optimization of the present invention. As such, variables may be created, deleted, or modified to accomplish a needed end if the optimization demands it. In addition to variable shown in Table 1, the present invention includes outline laser power, outline laser offset X, outline laser offset Y. The outline laser or beam, in general, is used to draw the perimeter of a scanned layer to improve the surface finish of the part. As such, the outline variable and outline function is configured to articulate the laser beam to follow the outline of the part layer. The fill laser or fill beam, unlike, the outline laser, rasters or fires back and forth to fill the part and not along the outline. Offset of the laser includes calibrating the exact location of the laser in the X or Y dimension along the periphery of the part.

**Table 1**

| BUILD PARAMETER | WARM-UP | BUILD | COOL-DOWN |
|---|---|---|---|
| Stage Height | 0.500 to 0.855 inch (12.7 to 21.72 mm) | N/A | 0.015 - 0.200 inch (0.381 to 5.08 mm) |
| Left Feed Distance | 0.01 inch (0.254 mm) | 0.01 inch (0.254 mm) | 0.01 inch (0.254 mm) |
| Left Feed Heater Set Point | 100° C - 140° C (212° F - 284° F) | 100° C - 140° C (212° F - 284° F) | 100° C - 140° C (212° F - 284° F) |
| Minimum Layer Time | 30 sec. | 20 - 30 sec. | 10 sec. |
| Part Heater Set Point | Tglaze-2° to Tglaze-4°C (Tglaze-3.6° to Tglaze-7.2°F) | Tglaze-2° to Tglaze-4°C (Tglaze-3.6° to Tglaze-7.2°F) | Tglaze-2° to Tglaze-4°C (Tglaze-3.6° to Tglaze-7.2°F) |
| Part Heater Inner/Outer Ratio | 0.70 - 1.0 | 0.70 - 1.0 | 0.7 - 1.0 |
| Right Feed Distance | 0.01 inch (0.254 mm) | 0.01 inch (0.254 mm) | 0.01 inch (0.254 mm) |
| Right Feed Heater Set Point | 100° C - 140° C (212° F - 284° F) | 100° C - 140° C (212° F - 284° F) | 100° C - 140° C (212° F - 284° F) |
| Fill Beam Offset X | N/A | -0.005 to 0.01 inch (-0.127 to 0.254 mm) | N/A |
| Fill Beam Offset Y | N/A | -0.005 to 0.01 inch (-0.127 to 0.254 mm) | N/A |
| Fill Laser Power | N/A | 15 - 20 Watts | N/A |
| Sorted Fill Max Jump | N/A | 0.25 - 0.5 inch (6.35 - 12.70 mm) | N/A |

### Variable Build and Part Sintering Parameters

Preferably, the powder material used to fabricate parts according to the present invention is a Nylon 11 material that contains no additives or fillers. Aerospace parts fabricated from such a Nylon material are capable of operating within a temperature range of approximately -65° F to approximately 215° F (about -53.9° C to about 101.7° C). One skilled in the art will readily appreciate that many other materials can be used in the selective laser sintering process and other rapid prototype processes. Other such candidate materials include, but are not limited to, metal powders, plastic powders, metal and plastic powder mixtures and ceramic and plastic powder mixtures.

### The Selective Laser Sintering Process

As previously set forth, the process of fabricating at least one aerospace part generally includes preparing the powder material, loading the powder material into a laser sintering machine, inputting the build parameters and nesting arrangement into the machine software, warming up the powder material (warm-up phase), building the part (build phase), cooling down the part (cool-down phase) and breaking parts out from part bed.

Prior to preparing the powder material, thermal characterization tests of the sintering/parts bed 22 are preferably conducted to provide a thermal model of the bed 22. As an example, the tests characterize temperature uniformity over the surface of the sintering bed 22. The thermal characterization tests may be conducted on parts that are dissimilar to the parts that are to be built, such as parts from a previous manufacturing run of a different part design having a different shape. One such thermal characterization test is a thermal profile test, wherein an aluminum plate with a plurality of thermocouples is placed in a sintering or part bed along with feed heaters that are operating at a set-point of 100° C or greater. Temperatures are thus monitored and recorded from a plurality of locations on the aluminum plate.

In the preferred implementations of the present invention, the temperature gradients should preferably not differ by more than about 4 degrees Celsius (about 7.2 degrees Fahrenheit) variation across the part bed. In a preferred alternative process of the present invention, the aluminum plate is substituted with a plate made of a sinterable material also containing the plurality of thermocouples. With the plate made of the same sinterable material, the same thermal profile test is performed.

The thermal model may also include data or information from a second thermal characterization test, such as a thermal opacity test (sometimes referred to as a thermpat test). In the thermal opacity test, an approximate 0.05 inch thick layer of the sinterable material is sintered over the entire surface of the part bed 22. The thermal opacity test thus provides an indication of any localized areas that are relatively warmer than surrounding areas by viewing the opacity of the sintered layer. Accordingly, both the thermal profile test and the thermal opacity test are conducted for each possible sintering machine and parts bed 22 that will be used to fabricate the aerospace parts or other types of parts.

### Warm-Up Phase

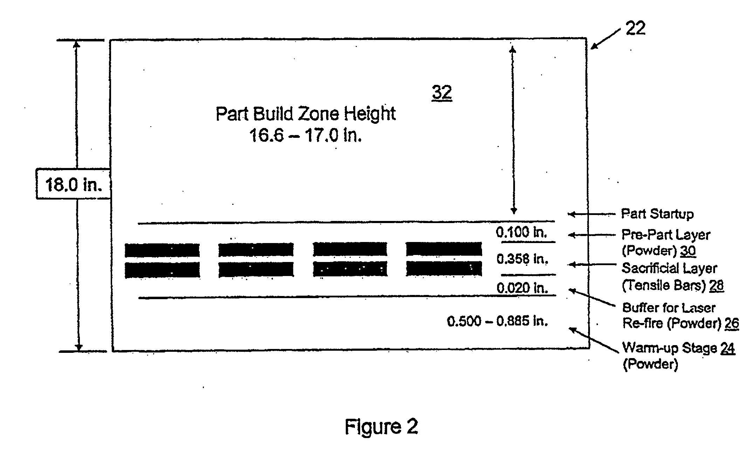

Referring now to Figure 2, a preferred layout for a part bed 22 is illustrated. According to the process of the present invention, layers of powder are first applied by a roller to create a warm-up stage 24, which comprises approximately 0.500 inch to approximately 0.885 inch (approximately 12.7 mm to approximately 22.48 mm) of powder. Further, temperatures are ramped up until a warm-up temperature is reached and endpoint temperatures in the feed heaters and the part bed 22 are set to starting temperatures of the build phase.

### Build Phase

The first step in the build phase is a laser re-fire sequence, during which glazing of the entire surface of the sintering bed occurs and a buffer layer 26 for laser re-fire is created. Generally, the purpose of the buffer layer 26 is to provide a buffer to prevent the re-fire laser from fusing to a subsequent layer of sacrificial tensile bars 28, which are formed after the buffer layer 26. The tensile bars, which are fabricated in accordance with ASTM D638 Type I, are tested after part fabrication to verify required physical and mechanical properties of the aerospace parts.

The next step of the build phase is forming a pre-part layer 30 of approximately 0.100 inch (about 2.54 mm). The pre-part layer 30 serves as a buffer before sintering the actual aerospace parts. Next, fabrication of the production parts is conducted within the part build zone 32 according to the hidden, fixed, and variable parameters and the variable parameters as previously set forth.

### Cool-Down Phase

The cool-down phase begins with the deposition of a buffer layer of powder over the part build, which serves as a thermal cap. During the cool-down phase, the nitrogen purge continues to maintain an inert atmosphere in the build chamber at no greater than approximately 0.2% oxygen volume content. Then, the part bed is allowed to cool to about approximately 40° C (about 104°F) to about 45° C (about 113°C), after which time the sintering machine is opened and the part cake (the fabricated part and excess powder material) is removed.

A working zone or build envelope used for building parts may vary considerably, but in one preferred implementation it is about 13.5 inches (about 342.9 mm) long by about 11.5 inches (about 292.9 mm) wide by about 17 inches (about 431.8 mm) high within the parts bed of the present invention. Although, parts may be fabricated beyond the dimensional constraints of the equipment by subsequently using methods such as mechanical fastening or bonding.

### Optimization of Selective Laser Sintering Machine Parameters

With an exemplarily selective laser sintering (SLS) process explained above, optimization of the process will be discussed. The preferred implementation of the present invention optimizes the SLS build parameters, also known as manufacturing parameters, to reduce deviations between the resulting dimensions and material characteristics of the production parts and the initial input data. One skilled in the art will readily appreciate that the process by which optimization is performed is readily applicable to any type of rapid prototyping process. Further, the SLS build parameters, for example, can be readily adapted to other SLS machines or other rapid prototyping processes.

The optimization of the build parameters are performed with the goal of reducing deviations between input values and output values. The term "deviation" refers to not just the deviation from a structural dimension, as noted above, but also deviation from desired material characteristics. More specifically, the SLS machine produces production parts with desired input dimensions and desired material characteristics. The SLS machine, however, may not always achieve the desired dimensions and material characteristics, which, in turn, creates a difference or deviation between the input or desired value and an output or resulting value. Optimizing the build parameters prior to building the parts greatly increases the performance of the SLS machine by driving the output dimensions and material characteristics to the desired values and ultimately decreases deviations from the same. Thus, a premise of this disclosure is that the build parameters used to build the parts in the SLS machine are optimized prior to building any parts in the machine in order to produce "final" parts on the first try. Optimizing before building any parts avoids a trial and error approach that requires building parts in a parts bed, testing the parts, adjusting the build parameters based on the testing, and then building new parts until suitable parameters are found.

In the preferred implementation of the present invention the variables, as outlined in Table 1 above, may be adjusted through an optimization routine in a parameter optimization step 48, which may also be considered to be an optimization module. As an example, the optimization module may be configured to computer simulate a part based on the thermal model of the parts bed 22 and the process build parameters that will be used in the future as an input into the SLS to form the part. For instance, the optimization module may be a computer having electronic hardware, software, or both for computer simulating the part. Generating the computer-simulated part may include evaluating and comparing the following rapid prototyping build information: A Thermal analysis of the part bed, material and mechanical properties, physical and thermal characteristics of the rapid prototyping material, and empirical data from previous build runs. The empirical data from previous build runs is derived from dimensional evaluation of the production parts and iterative improvement specimens produced during a given run. Additional empirical evidence may be derived from, among other things, destructive and other mechanical testing of the iterative improvement specimens. The optimization module and computer for conducting the computer-simulation may be separate from the SLS machine but operatively connected or connectable to the machine to send the final, optimized build parameters.

The optimization module may then predict physical properties of the computer-simulated part, which represent the expected physical properties of the part that is to be formed in the future. After the evaluation and comparison of the dimensions and material characteristics between the input or desired value and the and the output or resultant values, the rapid prototyping build parameters used by the SLS machine are compared to see what parameters and their associated values produce the best results in the production parts and iterative improvement specimens. Through manual manipulation and/or mathematical manipulation and comparison, the build parameters are adjusted based on the above comparisons to reduce deviations between the predicted physical properties and the desired physical properties of the part that is to be built. The newly optimized or modified parameters and all other information are categorized and stored in the optimization module or other suitable location. As an example, if the magnitude of the deviations meet predetermined requirements of the laser-sintered part that is to be formed, the modified build parameters may be communicated to the SLS to build the part(s). However, if the deviations do not meet the requirements, the optimization module may generate another computer-simulated part as described, but using the modified build parameters. Thus, the optimization module may conduct numerous iterations to progressively reduce the deviations until the requirements are met.

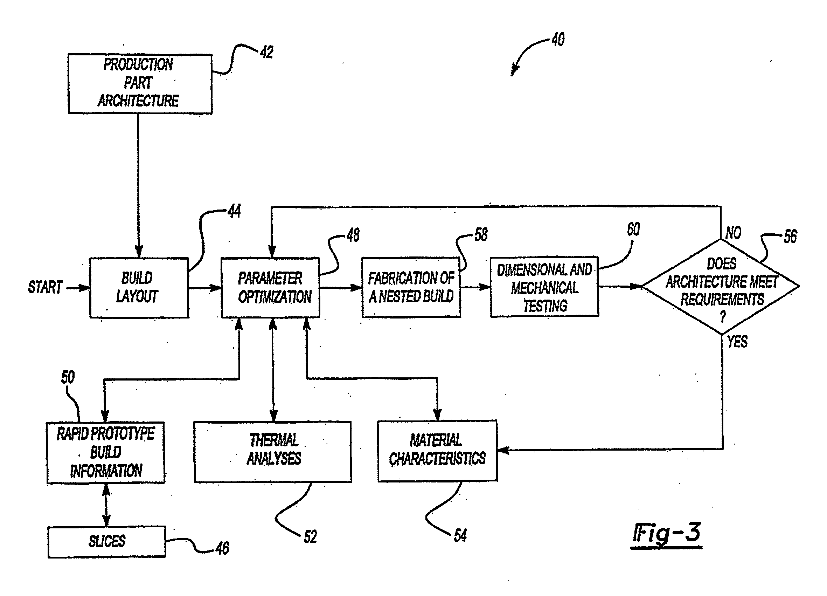

Referring to Figure 3, a process of optimizing production parts according to the present invention is represented in a flow diagram format as indicated by reference numeral 40. As shown, the process generally comprises a step 42 of providing production part architecture, producing the build layout at step 44, producing slices at step 46, and the parameter optimization at step 48. The parameter optimization step 48 may incorporate the rapid prototyping build information of step 50, thermal model or analyses from step 52, and material characteristics obtained from step 54. The rapid prototyping build information of step 50 incorporates the production of slices of step 46. As noted by the double-ended arrows information and processes may pass back and forth between the parameter optimization of step 48, the rapid prototype build information of step 50, the thermal analysis of step 52, the material characteristics of step 54, and the slices of step 46.

After completion of the parameter optimization step 48, the process 40 proceeds to the fabrication of the nested build step 58, which utilizes the modified build parameters from the optimization module to build the part(s). After completion of the fabrication of the nested build step 58, the process 40 proceeds to the dimensional and mechanical testing step 60. Upon completion of the dimensional and mechanical testing step 60, the resultant architecture is assessed, per step 56, to determine if the resultant architecture meets the requirements outlined by the user (not shown) as input by the production part architecture step 42. Failure to meet these requirements results in returning back to the parameter optimization step 48, which, in turn, produces a re-optimization of the parameters to achieve the desired architecture. Meeting the architecture requirements allows the process 40 to record the information derived during the build run and from the dimensional and mechanical testing of step 60 as successful run. Whether the architecture meets the stated requirements or not, the rapid prototype build information of step 50, the thermal model or analysis of step 52, the material characteristics of step 54, and the slices of step 46 are saved and noted as successful or unsuccessful runs to improve the parameter optimization.

The production part architecture step 42 can take many forms such as computer aided drawing (CAD) files, direct user input, or translated architecture from other computer operated software systems such as I-DEAS®, Pro-Engineer®, Auto-CAD®. One skilled in the art will readily appreciate that the production part architecture can take many forms and further be translated from many forms to be used in many rapid prototyping machines. In the preferred implementation of the present invention, the selective laser sintering machine receives architecture in the form of a CAD file in the step 42 of providing production part architecture.

The step 44 of producing the build layout involves a translation from the production part architecture step 42 to a readable format used by the rapid prototyping machine. In a preferred implementation of the present invention a selective laser sintering machine is used, namely the aforementioned 2500 Plus Sintering Machine from the 3D Systems®. To that end, 3D Systems® supplies a software package suitable for use with the 3D Systems® sinter station machine. The software package translates the production part architecture step 42 into a format a useful to the sintering machine. One skilled in the art will readily appreciate that use of a different machine would necessitate a different translation of the production part architecture to a format usable to that particular rapid prototyping machine. With that in mind, one skilled in the art may readily substitute other selective laser sintering machines or rapid prototyping machines for use with the present invention; as such, for example, different translation packages supplied by perspective suppliers would be used with the step of producing the build layout 44.

The step 46 of producing slices encompasses a process that performs a layer by layer calculation of feed heights, volume and mass of material required, and laser heat input. In a preferred implementation of the present invention, a selective laser sintering machine is used. A requirement of the sintering process is the formation of a plurality of horizontal cross-sectional slices of the parts being produced by the sintering machine. The step 46 of producing slices thus facilitates fabrication of the nested build at step 58 and the parameter optimization at of step 48, both of which will be discussed in greater detail below.

The step 48 of parameter optimization encompasses an analysis of all the variables and values used in the selective laser sintering process. As such, the rapid prototyping build information 50, thermal model or analyses 52, and material characteristics 54 are analyzed to produce the improved production parts on the first run rather than having to make and test sample parts in a trial and error approach. Through manual manipulation and/or mathematical manipulation and comparison of the above values, the parameters are adjusted to reduce deviations in output from the desired input dimensions and material characteristics.

The step 48 of the parameter optimization may further encompasses creation of scale factor. The scale factor comprises the desired input dimensions from the production part architecture 42 and the optimized parameters 48, which further includes the rapid prototyping build information 50 and material characteristics 54. With this information, a scale factor is produced that when applied serves as a multiplier for the input dimensions from the production part architecture 42. Application of the scale factor ultimately results in an adjustment or scaling of the input dimensions of the production part architecture 42, which, in turn, produces production components with the desired output dimensions. As an example, the scale factor may take into consideration additional pieces around the part that influence the heat input and loss for a given surface area. That is, the optimization module may incorporate the spacing and influence of all of the pieces in the part bed 22 into the computer-simulation to facilitate scaling. Processes from which the scale factor is derived are discussed in greater detail below. Notwithstanding, the scale factor may be derived from an analysis using the many forms of iterative improvement specimens discussed below or other items, parts, or material fabricated during a build run.

Fabrication of a nested build 58 encompasses a build run of the selective laser sintering machine. In the build run, the sintering machine produces, among other things, production parts and iterative improvement specimens. The iterative improvement specimens are produced along with or "nested" with the production parts and made of the same sinterable material.

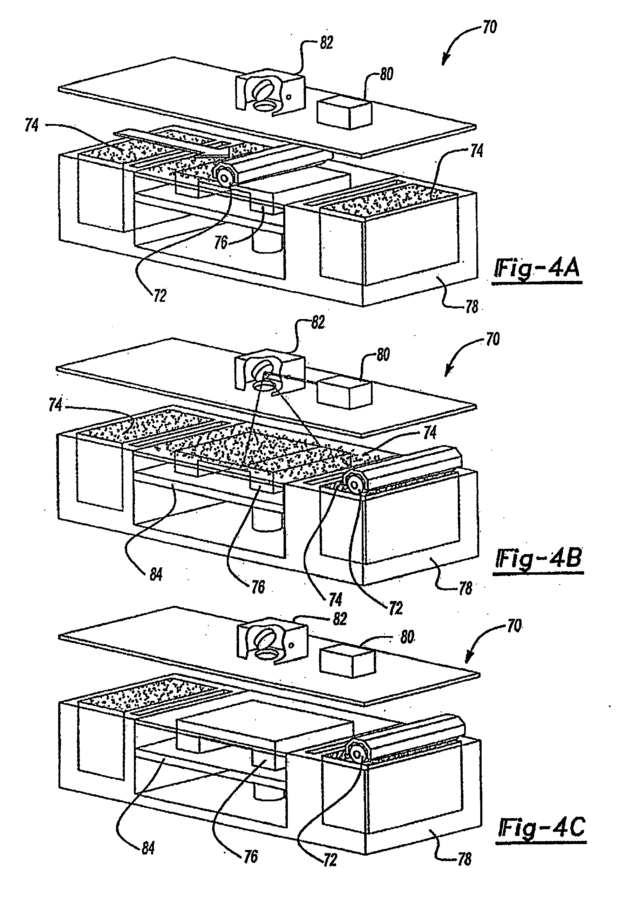

With reference to Figure 4a, 4b, 4c and continuing reference to the flow diagram of Figure 3, a simplified and exemplary sintering process is shown generally represented by reference numeral 70, which provides further detail of the operations (i.e., steps) performed at step 46 of generating slices and fabrication of a nested build 58. In Figure 4a, a powder roller 72 is shown spreading sinterable material 74 over the partially formed production part 76. The step 46 of producing slices in Figure 3 contributes to the regulation of how much sinterable material 74 is applied by limiting the volume and mass distributed by the powder roller 72.

In Figure 4b, the powder roller 72 is now stationary on one side of the sintering machine 78. The laser 80 of the sintering machine 78 fires through a set of optics 82, which directs the laser toward the production part 76. Laser 80 is now directed onto the sinterable material 74, which, in turn, sinters the material and produces the next horizontal cross-sectional layer of the production part 76. Also shown in Figure 4b, the powder roller 72 has spread a new layer of sinterable material 74 over the production part 76 and ultimately over the parts bed 84. After completion of the laser 80 firing on the sinterable material 74, as shown in Figure 4c, a newly sintered solid surface exists on the production part 76.

With the newly sintered horizontal surface on the production part 76, parts bed 84 descends a predetermined distance. The step 46 of producing slices, as shown in Figure 3, regulates the distance that the parts bed 84 descends after each new horizontal cross-sectional layer is sintered on the production part 76. After the parts bed 84 descends, powder roller 72 will once again pass over the production part 76 and the parts bed 84 delivering a predetermined amount of sinterable material 74, thus creating the next new horizontal cross-sectional slice of the production part 76. Repetition of the sintering process 70 results in a plurality of horizontal slices sintered into a complete production part.

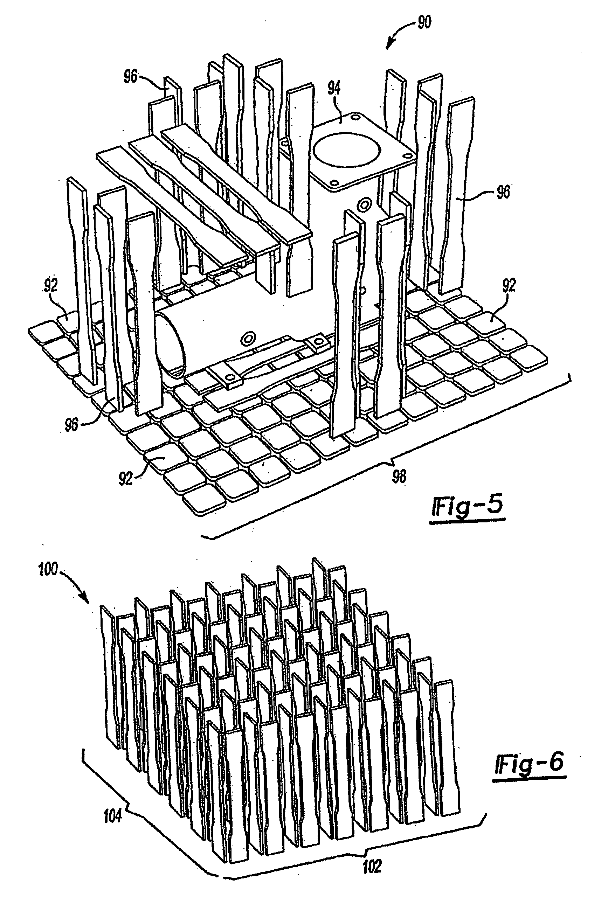

Figures 4a, 4b, and 4c show a simplified and partially completed production part 76. Repetition of the process 70, and first step 58, ultimately produces a nested build, which contains production parts and iterative improvement specimens. An exemplary final result of the step of fabrication of a nested build 58 is shown in Figure 5, where a completed exemplary nested build - including production parts and iterative improvement specimens - are produced in one build run and is generally indicated by reference numeral 90. The exemplary nested build 90 includes a sacrificial layer 92, production parts 94, and iterative improvement specimens 96 all contained in a parts bed 98. All of the components of the exemplary nested part build 90 are composed of the same rapid prototyping material. The sacrificial layer 92 is comprised of tensile bars, which are fabricated in accordance with ASTM D638 Type I, as noted above. The tensile bars are tested after the build run to verify required physical and mechanical properties. Like the tensile bars of the sacrificial layer 92, iterative improvement specimens 96 are constructed in accordance with the present invention in a plurality of locations not otherwise occupied by the production parts 94.

In a preferred implementation of the present invention the iterative improvement specimens 96 are Z-Tensile arrays. Alternatively, in the present invention the iterative improvement specimens 96 may be density cubes, dimensional pyramids, flexural samples, or any such iterative improvement specimen that allows one skilled in the art to measure dimensional, material or mechanical quantities along with performing a qualitative analysis.

The iterative improvement specimens 96 can be fabricated anywhere in the rapid prototyping machine parts bed and in any orientation. The Z-tensile arrays are either flat or cylindrical dumbbell shaped and can be produced in any dimension or location within and among the rapid prototyping machine parts. While the ultimate dimensions of the Z-Tensile array are limited by the size of the parts bed 84, the Z-Tensile array can take any dimension. The step of dimensional and mechanical testing 60 encompasses visual and dimensional inspection of the Z-Tensile array to determine output dimensions. Further, material characteristics derived from mechanical testing and other forms and mechanical manipulation of the Z-Tensile array are also determined per step 60. Results of the above inspection and testing are recorded as material characteristics data at step 54.

In a preferred alternative implementation of the present invention, the Z-Tensile arrays can occupy generally the entire parts bed of a rapid prototyping machine. Referring to Figures 3 and 6, and alternative layout of a parts bed of a rapid prototyping machine is indicated by reference numeral 100. In the layout 100, there exists a parts bed 102 and a plurality of the tensile arrays 104. The plurality of Z-Tensile arrays 104 occupies generally the entire parts bed 102. In this arrangement, fabrication of a nested build 58 produces only a plurality of Z-Tensile arrays 104. Fabrication of only a plurality of Z-Tensile arrays 104 allows for dimensional and mechanical testing 60 to be performed on parts produced from the entire parts bed. Testing of all the parts across the entire parts bed provides a more complete set of data which is, in turn, incorporated into material characteristics at step 54 (Figure 3) and ultimately used in the parameter optimization step 48.

Density cubes, constructed in accordance with a preferred alternative implementation of the present invention, are square, rectangular, or any other suitable simple geometric shaped cubes produced during fabrication of a nested build as described in connection with step 58 (Figure 3). The density cubes are analyzed by a process known to those skilled in the art to determine the density of the density cubes. While no particular dimensions are necessary, the accurate dimensions of the cubes as fabricated are needed to determine the density of the density cubes.

Dimensional pyramids, constructed in accordance with a preferred alternative implementation of the present invention, are pyramid shaped parts that have a staircase or ascending terraces appearance on all four sides. While no particular dimensions are necessary, the accurate dimensions of the dimensional pyramids as fabricated are used to determine performance of the selected rapid prototyping process and the process of optimizing the production parts made in accordance with the process 40.

Flexural samples, constructed in accordance with a preferred alternative implementation of the present invention, are rod shaped parts that have a generally uniform dimension. No particular length or diameter are necessary except where bounded by the dimensions of the parts bed 84, as the flexural specimens are used to, among other things, assess flexibility and elongation. The measured mass and measured ability to elongate the flexural specimens are used to determine performance of the selected rapid prototyping process and the process of optimizing the production parts as set forth in process 40.

It will readily be appreciated that the above exemplary iterative improvement specimens are not an exhaustive list of the possibilities that can be used the present invention. As such, any such item produced along with the production parts in a rapid prototyping machine that can be used to further assess the achievement of desired dimensions and/or material characteristics is well within the scope of the iterative improvement specimens. Further, any such iterative improvement specimens need not be used to the exclusion of another. Any or all of the iterative improvement specimens can be used, or combinations thereof, in a nested build as set forth in step 58 of Figure 3. Furthermore, alternative iterative improvements specimens may be used that mimic part architecture and complexity for certain type of build or part. One such exemplary alternative iterative improvement specimen may be a tube with similar cross-sections to desired parts, wherein the tube may be oriented in the parts bed at a similar three dimensional position and orientation when compared to the certain part

The thermal analysis of the part bed as mentioned above provides a thermal map of the rapid prototyping machine parts bed. A thermal analysis of the parts bed is performed to detect thermal gradients within the parts bed. As stated above, an aluminum plate or plate of sintered material is used outfitted with thermocouples to detect the thermal gradients while the parts bed is warmed. Also stated above, a thermal opacity test may be used.

In a preferred implementation of the present invention the thermal analysis is performed a priori or post mortem. One skilled in the art will readily appreciate that the thermal analysis can be performed prior to the production run, after the production run, or be adapted to be performed during the production run. It will also readily be appreciated that it is practically impossible to achieve a perfectly uniform temperature profile across the parts bed of a rapid prototype machine. With this limitation in mind, the thermal analysis not only provides the machine operator with known hot and cold areas of the parts bed, but actually allows for the optimization of other rapid prototyping parameters to accommodate the aforesaid hot and cold regions to achieve a more robust part, when compared to a typical SLS build with uncharacterized temperature gradients.

With the above thermal analyses and other optimized build parameters, placement of production parts within the parts bed of the rapid prototyping machine can be optimized. More specifically and with reference to Figures 3 and 5, the step of fabrication of a nested build as described at setup 58 of Figure 3 produces production parts 94 and iterative improvement specimens 96. Dimensional and mechanical testing at step 60 produces, among other things, deviations between input dimensions and output dimensions. The parameter optimization 48 takes into account, among other things, the deviations produced by the dimensional mechanical testing 60. Further, the parameter optimization step 48 takes into account thermal analyses as indicated at step 52. With the above knowledge, it becomes apparent that the deviations between input dimensions and output dimensions are not constant within the three-dimensional space of the parts bed 98. For example, deviations near the wall of the parts bed 98 or any cold spot per the thermal analyses at step 52 (Figure 3) may produce much greater deviations when compared to a central location within the parts bed 98. To that end, the parameter optimization 48 encompasses an optimized layout within the three-dimensional space of the parts bed 98 of a rapid prototyping machine. An optimized layout can take into account, among other things, larger or smaller deviations between input and output dimensions that may otherwise be consistent with three-dimensional locations within the parts bed 98.

The material characteristics of the selective laser sintering material of the present invention generally include material information and mechanical properties. The material information is derived from known values, empirically derived value, and computed values. The known values of the material such as melting point, density, and tensile stress are well known in the art or easily obtained from well known reference materials.

The known values for the selected sinterable material are readily obtainable from known reference materials. The optimization process of the present invention further derives additional empirical results and compares the empirical results to the known results. Referring to Figure 3, the step of dimensional and mechanical testing 60 encompasses analysis of the production parts and iterative improvement specimens. The analysis entails a visual and dimensional inspection of the production parts and the iterative improvement specimens to determine their dimensions and ultimate deviations from the production part architecture 42. Further analysis includes destructive testing, which entails various forms of mechanical testing, manual manipulation, and the like. The values of the material characteristics obtained through mechanical testing include, but are not limited to, tensile stress, ultimate tensile stress, elongation, modulus of elasticity, and density.

The above material characteristics are compared to the known values and compared to previous material characteristics achieved during previous build runs and ultimately compared to the production part architecture 42 which includes desired material characteristics. Computed values are additionally obtained by mathematical operations or the like with known values and/or empirical values. The relative deviations from the requisite material characteristics in the production part architecture 42 are analyzed at the parameter optimization step 48 to improve the quality of the production parts of subsequent production runs.

The optimization process of the present invention produces production parts far superior to parts produced from prior rapid prototyping machines and processes. Further, many rapid prototyping machines can be used to produce a large quantity of production parts. In addition, many rapid prototyping machines and the optimization process of the present invention can be included in a just-in-time inventory system. With reference to Figure 3, for example, demand for a part in a just-in-time inventory system would be accompanied by the production part architecture 42. The fabrication of a nested build ultimately produces the needed part and it is delivered to the predetermined point in the assembly process. Implementation of the above process allows for reduction in inventories on site, as production parts are readily available from the process 40 of optimizing production parts according to the present invention.

## Claims

1. A process for establishing manufacturing parameters for rapid prototyping using a rapid prototyping material to produce a laser sintered production part (76, 94) on a parts bed, the process comprising:
(a) computer simulating a manufacture of the laser-sintered part (76,94) based on a set of manufacturing parameters, the manufacturing parameters including each of temperature set point, laser power, machine stage height, laser offset, and part position;
(b) calculating a set of physical properties of the simulated manufacture, the physical properties including part dimensions and mechanical properties;
(c) comparing the calculated physical properties to desired physical properties;
(d) modifying the set of manufacturing parameters based on the calculated set in order to reduce a deviation between the calculated physical properties and the desired physical properties to obtain a desired set of physical properties; and
(e) communicating the modified set of parameters to a laser sintering machine to form the laser-sintered part;
wherein the process includes: establishing a thermal model of the parts bed (22,84,102) of a laser-sintering machine for laser sintering the laser sintered part (76,94) based on empirical data from testing of parts (96) previously formed in the parts bed that are different from the laser-sintered production part, and wherein the step of computer simulating of the manufacture uses the thermal model and includes evaluating and comparing the following information: thermal analysis of the part bed, material and mechanical properties, physical and thermal characteristics of the rapid prototyping material, and empirical data from previous build runs, wherein the empirical data from previous build runs is derived from dimensional evaluation of the laser-sintered production part (76,94) and of iterative improvement specimens (96) that are produced on the same parts bed during a given run.

2. The process as recited in claim 1, including repeating steps (a)-(d) using the modified manufacturing parameters from each repetition for the next repetition to progressively reduce a deviation until the deviation meets predetermined requirements of the laser-sintered part (76,94).

3. A laser sintering system for rapid prototyping using a rapid prototyping material to produce a laser sintered production part (76, 94) on a parts bed, the system comprising:
an optimization module configured to computer simulate a manufacture of the laser-sintered part (74,94) based on a set of manufacturing parameters, calculate a set of physical properties of the simulated manufacture, compare the calculated physical properties to desired physical properties, modify the set of manufacturing parameters based on the calculated set in order to reduce a deviation between the calculated physical properties and the desired physical properties to obtain a desired set of physical properties, and communicate the modified set of parameters to a laser sintering machine arranged to form a laser-sintered part;
wherein the manufacturing parameters include each of temperature set point, laser power, machine stage height, laser offset, and part position,
wherein the physical properties include part dimensions and mechanical properties; and
wherein the optimization module includes a thermal model of the parts bed (22,84,102) of a laser-sintering machine for laser sintering the laser sintered part (76,94) based on empirical data from testing of parts (96) previously formed in the parts bed that are different from the laser-sintered production part, and to computer simulate the manufacture by using the thermal model and by evaluating and comparing the following information: thermal analysis of the part bed, material and mechanical properties, physical and thermal characteristics of the rapid prototyping material, and empirical data from previous build runs, wherein the empirical data from previous build runs is derived from dimensional evaluation of the laser-sintered production part (76,94) and of iterative improvement specimens (96) that are produced on the same parts bed during a given run.

4. The laser sintering system as recited in claim 3, further including the laser sintering machine having a parts bed (22,84,102) for building the laser-sintered part (76,94) and in operative communication with the optimization module to receive the modified manufacturing parameters.

## Patentansprüche

1. Prozess zum Erstellen von Produktionsparametern für Rapid Prototyping unter Verwendung eines Rapid-Prototyping-Materials, um ein lasergesintertes Produktionsteil (76, 94) auf einem Teilebett herzustellen, wobei der Prozess Folgendes umfasst:
(a) Computersimulation einer Herstellung des lasergesinterten Teils (76, 94) auf der Basis eines Satzes von Produktionsparametern, wobei die Produktionsparameter jeden Parameter aus Temperatureinstellpunkt, Laserleistung, Maschinentischhöhe, Laserversatz und Teileposition umfassen;
(b) Berechnen eines Satzes von physikalischen Eigenschaften der simulierten Herstellung, der physikalischen Eigenschaften einschließlich Teiledimensionen und mechanischen Eigenschaften;
(c) Vergleichen der berechneten physikalischen Eigenschaften mit gewünschten physikalischen Eigenschaften;
(d) Modifizieren des Satzes von Herstellungsparametern auf der Basis des berechneten Satzes, um eine Abweichung zwischen den berechneten physikalischen Eigenschaften und gewünschten physikalischen Eigenschaften zu reduzieren, um einen gewünschten Satz von physikalischen Eigenschaften zu erreichen; und
(e) Mitteilen des modifizierten Satzes von Parametern an eine Lasersintermaschine, um das lasergesinterte Teil zu bilden;
wobei der Prozess Folgendes umfasst: Erstellen eines thermischen Modells des Teilebetts (22, 84, 102) einer Lasersintermaschine zum Lasersintern des lasergesinterten Teils (76, 94) auf der Basis von empirischen Daten aus der Testung von Teilen (96), die vorher im Teilebett geformt wurden, welche sich von dem lasergesinterten Produktionsteil unterscheiden und wobei der Schritt der Computersimulation der Herstellung das thermische Modell verwendet und das Bewerten und Vergleichen der folgenden Informationen enthält: thermische Analyse des Teilebetts, des Materials und der mechanischen Eigenschaften, physikalischen und thermischen Kennwerte des Rapid Prototyping Materials und empirischer Daten aus vorherigen Aufbauläufen, wobei die empirischen Daten aus vorherigen Aufbauläufen aus der Dimensionsbeurteilung des lasergesinterten Produktionsteils (76, 94) und von Exemplaren der iterativen Verbesserung (96) abgeleitet sind, die auf demselben Teilebett während eines gegebenen Laufs erzeugt werden.

2. Prozess nach Anspruch 1, der das Wiederholen von Schritten (a)-(d) unter Verwendung der modifizierten Herstellungsparameter von jeder Wiederholung für die nächste Wiederholung verwendet, um fortschreitend eine Abweichung zu reduzieren, bis die Abweichung vorher festgelegte Anforderungen des lasergesinterten Teils (76, 94) erfüllt.

3. Lasersintersystem für Rapid Prototyping unter Verwendung eines Rapid-Prototyping-Materials, um ein lasergesintertes Produktionsteil (76, 94) auf einem Teilebett herzustellen, wobei das System Folgendes umfasst:
ein Optimierungsmodul, das ausgelegt ist zur Computersimulation einer Herstellung des lasergesinterten Teils (74, 94) auf der Basis eines Satzes von Herstellungsparametern, zum Berechnen eines Satzes von physikalischen Eigenschaften der simulierten Herstellung, Vergleichen der berechneten physikalischen Eigenschaften mit gewünschten physikalischen Eigenschaften, Modifizieren des Satzes von Herstellungsparametern auf der Basis des berechneten Satzes, um eine Abweichung zwischen den berechneten physikalischen Eigenschaften und den gewünschten physikalischen Eigenschaften zu reduzieren, um einen gewünschten Satz von physikalischen Eigenschaften zu erhalten, und Übertragen des modifizierten Satzes von Parametern auf eine Lasersintermaschine, die zum Bilden eines lasergesinterten Teils ausgelegt ist;
wobei die Herstellungsparameter jeden Wert des Temperatursollpunktes, der Laserleistung, Maschinentischhöhe, des Laserversatzes und der Teileposition enthalten,
wobei die physikalischen Eigenschaften die Teiledimensionen und mechanischen Eigenschaften umfassen;
und
wobei das Optimierungsmodul ein thermisches Modells des Teilebetts (22, 84, 102) einer Lasersintermaschine zum Lasersintern des lasergesinterten Teils (76, 94) auf der Basis von empirischen Daten aus der Testung von Teilen (96) umfasst, die vorher im Teilebett geformt wurden, welche sich von dem lasergesinterten Produktionsteil unterscheiden, und die Computersimulation der Herstellung durch Verwenden des thermischen Modells und durch Bewerten und Vergleichen der folgenden Informationen enthält: thermische Analyse des Teilebetts, des Materials und der mechanischen Eigenschaften, physikalischen und thermischen Kennwerte des Rapid Prototyping Materials und empirischer Daten aus vorherigen Aufbauläufen, wobei die empirischen Daten aus vorherigen Aufbauläufen aus der Dimensionsbeurteilung des lasergesinterten Produktionsteils (76, 94) und von Exemplaren der iterativen Verbesserung (96) abgeleitet sind, die auf demselben Teilebett während eines gegebenen Laufs erzeugt werden.

4. Lasersintersystem nach Anspruch 3, das ferner die Lasersintermaschine umfasst, welche ein Teilebett (22, 84, 102) zum Aufbauen des lasergesinterten Teils (76, 94) hat und in operativer Kommunikation mit dem Optimierungsmodul zum Aufnehmen der modifizierten Herstellungsparameter steht.

## Revendications

1. Processus pour établir des paramètres de fabrication pour un prototypage rapide en utilisant une matière de prototypage rapide pour produire une pièce de production frittée par laser (76, 94) sur un banc de pièces, le processus comprenant :
(a) la simulation par ordinateur d'une fabrication de la pièce frittée par laser (76, 94) en se basant sur un ensemble de paramètres de fabrication, les paramètres de fabrication incluant chacun d'un point de réglage de température, d'une puissance de laser, d'une hauteur d'un plateau machine, d'un décalage laser, et d'une position de pièce ;
(b) le calcul d'un ensemble de propriétés physiques de la fabrication simulée, les propriétés physiques incluant des dimensions de pièce et des propriétés mécaniques ;
(c) la comparaison des propriétés physiques calculées à des propriétés physiques souhaitées ;
(d) la modification de l'ensemble de paramètres de fabrication en se basant sur l'ensemble calculé afin de réduire un écart entre les propriétés physiques calculées et les propriétés physiques souhaitées pour obtenir un ensemble souhaité de propriétés physiques ; et
(e) la communication de l'ensemble modifié de paramètres à une machine de frittage par laser pour former la pièce frittée par laser ;
dans lequel le processus inclut : l'établissement d'un modèle thermique du banc de pièces (22, 84, 102) d'une machine de frittage par laser pour le frittage par laser de la pièce frittée par laser (76, 94) en se basant sur des données empiriques provenant de l'évaluation de pièces (96) précédemment formées dans le banc de pièces qui sont différentes de la pièce de production frittée par laser, et dans lequel l'étape de simulation par ordinateur de la fabrication utilise le modèle thermique et inclut l'évaluation et la comparaison des informations suivantes : analyse thermique du banc de pièce, propriétés mécaniques et matérielles, caractéristiques physiques et thermiques de la matière de prototypage rapide, et données empiriques provenant de passes de construction précédentes, dans lequel les données empiriques provenant de passes de construction précédentes sont obtenues à partir d'une évaluation dimensionnelle de la pièce de production frittée par laser (76, 94) et de spécimens d'amélioration itératifs (96) qui sont produits sur le même banc de pièces pendant une passe donnée.

2. Processus selon la revendication 1, incluant des étapes répétitives (a) à (d) utilisant les paramètres de fabrication modifiés provenant de chaque répétition pour la répétition suivante pour réduire progressivement un écart jusqu'à ce que l'écart satisfasse à des exigences prédéterminées de la pièce frittée par laser (76, 94).

3. Système de frittage par laser pour un prototypage rapide en utilisant une matière de prototypage rapide pour produire une pièce de production frittée par laser (76, 94) sur un banc de pièces, le système comprenant :
un module d'optimisation configuré pour simuler par ordinateur une fabrication de la pièce frittée par laser (74, 94) en se basant sur un ensemble de paramètres de fabrication, calculer un ensemble de propriétés physiques de la fabrication simulée, comparer les propriétés physiques calculées à des propriétés physiques souhaitées, modifier l'ensemble de paramètres de fabrication en se basant sur l'ensemble calculé afin de réduire un écart entre les propriétés physiques calculées et les propriétés physiques souhaitées pour obtenir un ensemble souhaité de propriétés physiques, et communiquer l'ensemble modifié de paramètres à une machine de frittage par laser agencée pour former une pièce frittée par laser ;
dans lequel les paramètres de fabrication incluent chacun d'un point de réglage de température, d'une puissance de laser, d'une hauteur de plateau machine, d'un décalage laser, et d'une position de pièce,
dans lequel les propriétés physiques incluent des dimensions de pièce et des propriétés mécaniques ; et
dans lequel le module d'optimisation inclut un modèle thermique du banc de pièces (22, 84, 102) d'une machine de frittage par laser pour fritter par laser la pièce frittée par laser (76, 94) en se basant sur des données empiriques provenant de l'évaluation de pièces (96) précédemment formées dans le banc de pièces qui sont différentes de la pièce de production frittée par laser, et pour simuler par ordinateur la fabrication en utilisant le modèle thermique et en évaluant et en comparant les informations suivantes : analyse thermique du banc de pièce, propriétés mécaniques et matérielles, caractéristiques physiques et thermiques de la matière de prototypage rapide, et données empiriques provenant de passes de construction précédentes, dans lequel les données empiriques provenant de passes de construction précédentes sont obtenues à partir d'une évaluation dimensionnelle de la pièce de production frittée par laser (76, 94) et de spécimens d'amélioration itératifs (96) qui sont produits sur le même banc de pièces pendant une passe donnée.

4. Système de frittage par laser selon la revendication 3, incluant en outre la machine de frittage par laser ayant un banc de pièces (22, 84, 102) pour construire la pièce frittée par laser (76, 94) et en communication opérationnelle avec le module d'optimisation pour recevoir les paramètres de fabrication modifiés.
